# EUROPEAN PATENT APPLICATION

(11) **EP 4 426 037 A1**
(43) Date of publication of application: **04.09.2024**
(21) Application number: 22922920.8
(22) Date of filing: 29.01.2022
(51) Int. Cl.: H04W 72/04

(54) **COMPUTING TASK SCHEDULING APPARATUS, COMPUTING APPARATUS, COMPUTING TASK SCHEDULING METHOD AND COMPUTING METHOD**

(71) Applicant: Huawei Technologies Co., Ltd., Shenzhen, Guangdong 518129 (CN)
(72) Inventor: ZHANG, Long, Shenzhen, Guangdong 518129 (CN); ZHENG, Ming, Shenzhen, Guangdong 518129 (CN); HE, Shiming, Shenzhen, Guangdong 518129 (CN)
(74) Representative: Gill Jennings & Every LLP
(86) International application number: PCT/CN2022/075123
(87) International publication number: WO 2023/142091

(57) **Abstract**

This application provides a computing task scheduling apparatus, a computing apparatus, a computing task scheduling method, and a computing method. The computing task scheduling apparatus includes: a task scheduler, configured to: determine a first computing task for a first computing unit, and generate load information of the first computing task, where the load information is used to define the first computing task; and a processor, configured to: receive the load information from the task scheduler, and store the load information to a first address in a memory, to allocate the first computing task to the first computing unit, where the first address is a reserved address of the first computing unit, the processor is coupled to at least one of the memory and the first computing unit through a bus, the first computing unit is tightly coupled to the memory, the tight coupling does not need any bus, and the first computing unit is capable of accessing the memory at a speed higher than that of accessing the memory through the bus. The technical solution can reduce data transmission overheads and reduce computing complexity.

## Description

### TECHNICAL FIELD

This application relates to the field of computer technologies, and in particular, to a computing task scheduling apparatus, a computing apparatus, a computing task scheduling method, and a computing method.

### BACKGROUND

In a general-purpose computer system, a Von Neumann or Harvard architecture is a decoupled computing and storage architecture. Data needed for computing needs to be loaded from an external memory to a computing core memory, that is, a buffer. After the computing is completed, the data needs to be returned from the core memory to the external memory. As a result, power consumption of data transmission in a computing process increases.

To reduce the power consumption of the data transmission, a computing convergence technology or a near-memory computing or in-memory computing technology may be used. In the computing convergence technology, multi-step computing is performed in a convergence manner, to reduce interaction with the external memory. However, computing convergence needs a cache of a specific size in a computing core and fine-grained software segmentation management, resulting in high implementation complexity. Near-memory computing is completed near a memory, and in-memory computing is directly performed inside the memory, so that the power consumption of the data transmission can be reduced. However, corresponding computing instructions usually need to be added for the near-memory computing or the in-memory computing, and for different hardware platforms, adaptation solutions are not unified, resulting in high complexity.

Therefore, how to reduce the computing complexity while ensuring that the power consumption of the data transmission is reduced becomes a technical problem that needs to be resolved.

### SUMMARY

This application provides a storage and computing apparatus and a storage and computing method, to reduce data transmission overheads and reduce computing complexity.

According to a first aspect, a computing task scheduling apparatus is provided. The computing task scheduling apparatus includes: a task scheduler, configured to: determine a first computing task for a first computing unit, and generate load information of the first computing task, where the load information is used to define the first computing task; and a processor, configured to: receive the load information from the task scheduler, and store the load information to a first address in a memory, to allocate the first computing task to the first computing unit, where the first address is a reserved address of the first computing unit, the processor is coupled to at least one of the memory and the first computing unit through a bus, the first computing unit is tightly coupled to the memory, the tight coupling does not need any bus, and the first computing unit is capable of accessing the memory at a speed higher than that of accessing the memory through the bus.

In the technical solution, the task scheduler may determine the computing task for the first computing unit, so that a software module does not need to sense a computing capability of the first computing unit, and software complexity may be reduced. In addition, the processor stores the load information of the computing task to the fixed address in the memory by accessing the memory, to allocate the computing task to the first computing unit, where the first computing unit is tightly coupled to the memory. In this case, task computing can be quickly completed, and there is no need to perform task scheduling information transmission between the processor and the first computing unit through a specific bus or interface, so that power consumption and a delay of data transmission are reduced.

With reference to the first aspect, in an implementation of the first aspect, the processor is specifically configured to store the load information to the first address by using a direct memory access DMA controller.

In the technical solution, the processor implements the foregoing beneficial effects by reusing an existing DMA technology, and stores the load information to the first address in the memory by using the DMA, to allocate the first computing task to the first computing unit, so that system overheads can be reduced, and computing efficiency can be improved.

With reference to the first aspect, in an implementation of the first aspect, the task scheduler is a dedicated task scheduler other than system software or application software.

It should be understood that the task scheduler may be a hardware task scheduler dedicated to task scheduling.

With reference to the first aspect, in an implementation of the first aspect, the task scheduler is further configured to: receive a computing task sequence from the system software or the application software, and determine the first computing task for the first computing unit in the computing task sequence.

It should be understood that the computing task sequence may include one or more computing tasks, and the first computing task may be one or more computing tasks. This is not limited in this embodiment of this application.

With reference to the first aspect, in an implementation of the first aspect, the task scheduler is further configured to: determine a second computing task for a second computing unit in the computing task sequence; and schedule the second computing task to the second computing unit, where the second computing unit includes at least one of the processor, an image processing unit, an artificial intelligence Al processing unit, a digital signal processor, or a dedicated logic circuit, and the second computing unit and the memory are coupled through the bus.

In the technical solution, when determining, in the computing task sequence, that the second computing task is not suitable for the first computing unit to complete computing, the task scheduler may schedule the second computing task to the second computing unit, where the second computing unit is coupled to the memory through the bus. For example, the second computing task may be another task that is not suitable for near-memory computing, in-memory computing, or computing in-memory.

With reference to the first aspect, in an implementation of the first aspect, the task scheduler is specifically configured to determine, based on a computing list, the first computing task for the first computing unit in the computing task sequence, where the computing list includes a computing task type supported by the first computing unit.

It should be understood that the computing list may alternatively be a linked list or the like.

In some embodiments, the computing list may be updated. For example, when the computing type supported by the first computing unit changes, the changed computing type may be added to the computing list, to complete updating of the computing list. Alternatively, when the task scheduler and the processor are used in another computing unit, a computing type supported by the computing unit may be added to the computing list. Therefore, system compatibility can be improved.

With reference to the first aspect, in an implementation of the first aspect, the load information includes at least one of the following information: a data address, a data dimension, or a control command word.

It should be understood that the load information may further include other information used for the computing task, and the like.

With reference to the first aspect, in an implementation of the first aspect, the tight coupling includes near-memory computing coupling, in-memory computing coupling, or computing in-memory coupling.

According to a second aspect, a computing apparatus is provided. The computing apparatus includes: a memory; and a first computing unit, configured to: obtain load information from a first address in the memory, and complete a first computing task based on the load information, where the load information is used to define the first computing task, the first address is a reserved address of the first computing unit, the first computing unit is tightly coupled to the memory, the tight coupling does not need any bus, the first computing unit is capable of accessing the memory at a speed higher than that of accessing the memory through the bus, and at least one of the memory and the first computing unit is coupled to a processor through the bus.

In the technical solution, the first computing unit obtains the load information from the memory, and the first computing unit is tightly coupled to the memory, so that system overheads needed for computing can be reduced, and computing efficiency can be improved.

With reference to the second aspect, in an implementation of the second aspect, the load information includes at least one of the following information: a data address, a data dimension, or a control command word.

With reference to the second aspect, in an implementation of the second aspect, the tight coupling includes near-memory computing coupling, in-memory computing coupling, or computing in-memory coupling.

With reference to the second aspect, in an implementation of the second aspect, the memory is specifically configured to write the load information into the first address under an operation of a direct memory access DMA controller.

In the technical solution, the memory may write the load information into the first address by using DMA. Therefore, bus overheads can be reduced.

According to a third aspect, a computing task scheduling method is provided. The computing task scheduling method includes: A task scheduler determines a first computing task for a first computing unit, and generates load information of the first computing task, where the load information is used to define the first computing task. A processor receives the load information from the task scheduler, and stores the load information to a first address in a memory, to allocate the first computing task to the first computing unit, where the first address is a reserved address of the first computing unit, the processor is coupled to at least one of the memory and the first computing unit through a bus, the first computing unit is tightly coupled to the memory, the tight coupling does not need any bus, and the first computing unit is capable of accessing the memory at a speed higher than that of accessing the memory through the bus.

With reference to the third aspect, in an implementation of the third aspect, the storing the load information to the first address in the memory, to allocate the first computing task to the first computing unit includes: storing the load information to the first address by using a direct memory access DMA controller, to allocate the first computing task to the first computing unit.

With reference to the third aspect, in an implementation of the third aspect, the task scheduler is a dedicated task scheduler other than system software or application software.

With reference to the third aspect, in an implementation of the third aspect, that the task scheduler determines the first computing task for the first computing unit includes: The task scheduler receives a computing task sequence from the system software or the application software, and determines the first computing task for the first computing unit in the computing task sequence.

With reference to the third aspect, in an implementation of the third aspect, the method further includes: determining a second computing task for a second computing unit in the computing task sequence; and scheduling the second computing task to the second computing unit, where the second computing unit includes at least one of the processor, an image processing unit, an artificial intelligence AI processing unit, a digital signal processor, or a dedicated logic circuit, and the second computing unit and the memory are coupled through the bus.

With reference to the third aspect, in an implementation of the third aspect, the determining the first computing task for the first computing unit in the computing task sequence includes: determining, based on a computing list, the first computing task for the first computing unit in the computing task sequence, where the computing list includes a computing task type supported by the first computing unit.

With reference to the third aspect, in an implementation of the third aspect, the load information includes at least one of the following information: a data address, a data dimension, or a control command word.

With reference to the third aspect, in an implementation of the third aspect, the tight coupling includes near-memory computing coupling, in-memory computing coupling, or computing in-memory coupling.

According to a fourth aspect, a computing method is provided. The computing method includes: A first computing unit obtains load information from a first address in a memory, and completes a first computing task based on the load information, where the load information is used to define the first computing task, the first address is a reserved address of the first computing unit, the first computing unit is tightly coupled to the memory, the tight coupling does not need any bus, the first computing unit is capable of accessing the memory at a speed higher than that of accessing the memory through the bus, and at least one of the memory and the first computing unit is coupled to a processor through the bus.

With reference to the fourth aspect, in an implementation of the fourth aspect, the load information includes at least one of the following information: a data address, a data dimension, or a control command word.

With reference to the fourth aspect, in an implementation of the fourth aspect, the tight coupling includes near-memory computing coupling, in-memory computing coupling, or computing in-memory coupling.

With reference to the fourth aspect, in an implementation of the fourth aspect, the method further includes: The memory writes the load information into the first address under an operation of a direct memory access DMA controller.

According to a fifth aspect, a computer-readable storage medium is provided. The storage medium stores a computer program or instructions; and when the computer program or the instructions are executed by a communication apparatus, the computing task scheduling method according to any one of the third aspect and the possible implementations of the third aspect is performed, or the computing method according to any one of the fourth aspect and the possible implementations of the fourth aspect is performed.

According to a sixth aspect, a computer program product is provided. When the computer program product is run on a computer, the computing task scheduling method according to any one of the third aspect and the possible implementations of the third aspect is performed, or the computing method according to any one of the fourth aspect and the possible implementations of the fourth aspect is performed.

According to a seventh aspect, a computing system is provided. The computing system includes the task scheduling apparatus according to any one of the first aspect and the possible implementations of the first aspect and the computing apparatus according to any one of the second aspect and the possible implementations of the second aspect.

### BRIEF DESCRIPTION OF DRAWINGS

FIG. 1 is a block diagram of a computing apparatus according to an embodiment of this application;
FIG. 2 is a block diagram of a near-memory computing apparatus according to an embodiment of this application;
FIG. 3 is a block diagram of a computing task scheduling apparatus according to an embodiment of this application;
FIG. 4 is a diagram of determining a target computing task based on a computing list according to an embodiment of this application;
FIG. 5 is a block diagram of another computing task scheduling apparatus according to an embodiment of this application;
FIG. 6 is a schematic flowchart of a computing task scheduling method according to an embodiment of this application; and
FIG. 7 is a schematic flowchart of another computing task scheduling method according to an embodiment of this application.

### DESCRIPTION OF EMBODIMENTS

The following describes technical solutions in this application with reference to accompanying drawings.

In a general-purpose computer system, a Von Neumann or Harvard architecture is a decoupled computing and storage architecture. Data needed for computing needs to be loaded from an external memory to a computing core. After the computing is complete, the data needs to be returned from a core memory to the external memory. In a current era of rapid development of neural networks, most acceleration hardware uses the Von Neumann architecture. The neural network is characterized by both computing-intensive and data-intensive computing. The computing core has computing resources with high data parallelism, which requires high bandwidth. Therefore, in power consumption decomposition of overall computing, power consumption overheads of data transmission are usually higher than power consumption overheads of the computing.

To reduce the power consumption overheads of the data transmission, a technical solution of computing convergence may be used. To be specific, multi-step computing is performed in a convergence manner, to reduce interaction with the external memory. Computing convergence can effectively relieve bandwidth pressure and reduce the power consumption overheads of the transmission. However, the computing convergence needs a cache of a specific size (such as a static random-access memory, SRAM) in the computing core. In addition, the computing convergence needs fine-grained software segmentation management, resulting in high implementation complexity.

In addition to the computing convergence, a near-memory computing (near-memory computing, NMC) or in-memory computing (in-memory computing, IMC) technology may be used to reduce the power consumption overheads of the data transmission. Both near-memory computing and in-memory computing are new architecture technology directions that focus on a memory. Computing is performed near the memory or directly inside the memory, to break through a limitation of the Von Neumann architecture and reduce the power consumption overheads of the data transmission. In the near-memory computing, a memory and a computing processor are tightly coupled, and a delay and power consumption of data transmission are reduced by using a short wire, to improve system energy efficiency. With the development of a manufacturing process and a packaging technology, computing logic and storage are stacked to build hybrid computing and storage. In the in-memory computing, computing is directly completed in a memory array, and this reduces data transmission between the computing processor and the memory. However, the near-memory or in-memory computing technology is limited by computing characteristics and complexity of storage and computing hardware design.

Corresponding computing instructions usually need to be added for the near-memory computing or the in-memory computing, and for different hardware platforms, adaptation solutions are not unified, resulting in high integration complexity. In view of this, embodiments of this application provide a storage and computing apparatus and a storage and computing method. The technical solutions can further reduce implementation complexity while ensuring low power consumption of data transmission.

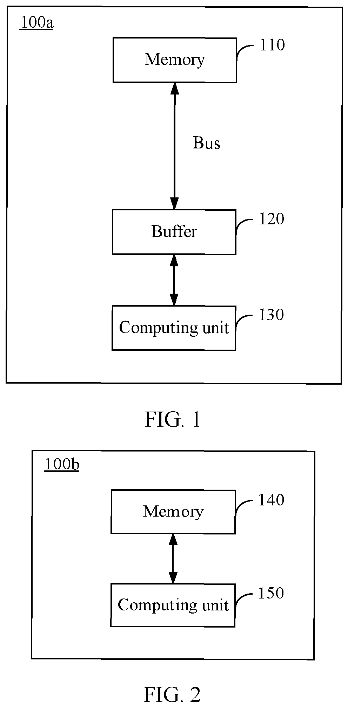

Before the technical solutions of this application are described, a difference between common computing and near-memory computing or in-memory computing is first described with reference to FIG. 1 and FIG. 2.

FIG. 1 is a block diagram of a common computing apparatus according to an embodiment of this application. As shown in FIG. 1, in the apparatus 100a, a memory 110 writes, through a bus, data that needs to be computed into a buffer (buffer) 120. When a common computing unit 130 performs computing, the common computing unit 130 reads the buffer, to obtain the data that needs to be computed from the buffer 120, and then the common computing unit 130 completes a computing operation, writes a computing result into the buffer 120, and writes the data from the buffer 120 into the memory 110 through the bus. In a process in which the common computing unit 130 completes the computing, the buffer 120 needs to perform reading and writing for a plurality of times, and the memory 110 needs to interact with the buffer 120 for a plurality of times through the bus, so that system bus overheads are high.

FIG. 2 is a block diagram of a near-memory computing apparatus according to an embodiment of this application. As shown in FIG. 2, in the apparatus 100b, a near-memory computing unit 150 may be located outside a memory 140, and is tightly coupled to the memory 140. Therefore, when performing computing, the near-memory computing unit 150 may not interact with the memory 140 through a bus, but exchange data through a physical wire or a circuit wire. Because the near-memory computing unit 150 is tightly coupled to the memory 140, a distance between the near-memory computing unit 150 and the memory 140 is short, and the physical wire or the circuit wire for data transmission is short, a delay and power consumption of the data transmission between the near-memory computing unit and the memory can be reduced, and bus overheads are also reduced.

In some embodiments, the near-memory computing unit 150 may alternatively be an in-memory computing unit. The in-memory computing unit may be located inside the memory 140. For example, the in-memory computing unit may be embedded in the memory 140 as a part of the memory, that is, the memory has a computing capability. The in-memory computing unit may interact with the memory through a physical wire or a circuit wire. The in-memory computing unit may alternatively directly read data inside the memory without using a read/write protocol, to complete computing without using a bus, so that bus overheads can be reduced.

The near-memory computing unit 150 and the memory 140 may alternatively be a computing in-memory unit. In this case, the computing in-memory unit cannot only store data, but also complete computing, so that bus overheads between computing and storage can be reduced, and a delay and power consumption of data transmission can also be reduced.

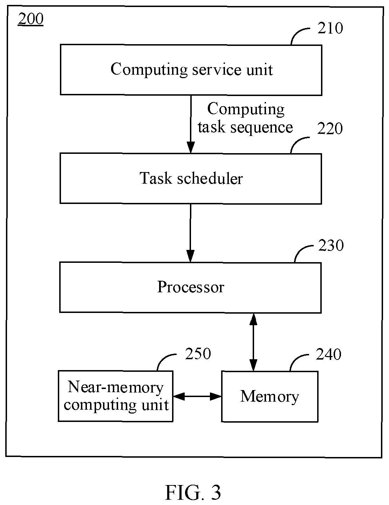

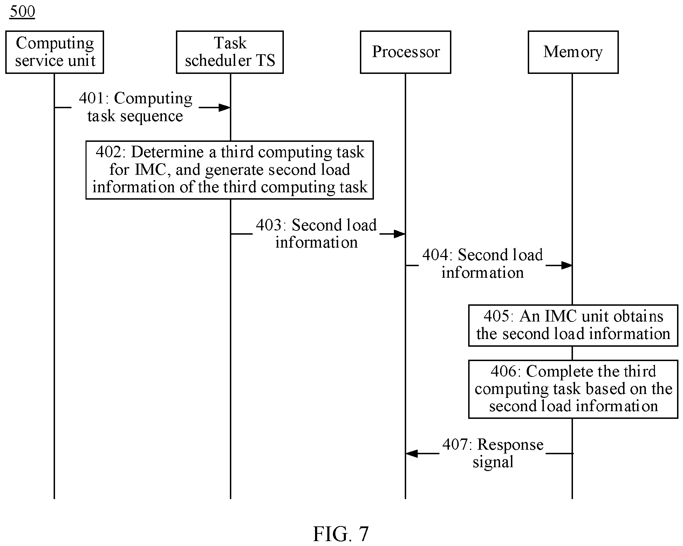

The following describes the technical solutions in embodiments of this application in detail with reference to FIG. 3 to FIG. 7.

FIG. 3 is a block diagram of a computing task scheduling apparatus according to an embodiment of this application. As shown in FIG. 3, the apparatus 200 may include a computing service unit 210, a task scheduler 220, a processor 230, a memory 240, and a near-memory computing unit 250. Optionally, the task scheduler 220 and the processor 230 in the apparatus 200 may be located in a chip, for example, a system-on-a-chip (SoC). The memory 240 and the near-memory computing unit 250 may be located in another chip.

The computing service unit 210 is located at a service scheduling layer and is a software module. For example, the computing service unit 210 may be system software, or may be application software. The task scheduler 220 is a hardware scheduler, and the processor 230, the memory 240, and the near-memory computing unit 250 are all hardware components. The processor 230 may run the system software or the application software, to execute a computing or processing task. The processor may further interact with another hardware device, for example, send/receive data or instructions. The memory 240 may be configured to store data and can be accessed by another hardware device, for example, the processor 230. The near-memory computing unit 250 may include a computing circuit, configured to execute a computing task, where the computing task may be different from a computing task executed by the processor 230.

For example, the computing service unit 210 sends a compiled computing task sequence to the task scheduler 220. The task scheduler 220 parses the computing task sequence, and determines whether near-memory computing can be performed on the computing task. When determining that the near-memory computing can be performed on a target computing task, the task scheduler 220 invokes a near-memory computing load generation function to generate load information of a first computing task, and schedules the load information of the first computing task to the processor 230. The processor 230 (for example, a CPU) stores the load information of the first computing task to a first address in the memory. Optionally, the first address is a reserved address, and is used for load information exchange between the processor 230 and the near-memory computing unit 250. The near-memory computing unit 250 may access the first address, to obtain load information of the target computing task. Then, the near-memory computing unit 250 completes computing based on the load information, and stores a computing result in the memory 240.

Specifically, the task scheduler 220 may determine the first computing task for the near-memory computing unit, and generate the load information of the first computing task, where the load information is used to define the first computing task.

For example, the task scheduler is a dedicated task scheduler other than the system software or the application software. That is, the task scheduler is a hardware task scheduler that is in the apparatus 200 and that is specially configured to schedule a computing task.

The processor 230 may receive the load information from the task scheduler 220, and store the load information to the first address in the memory 240, to allocate the first computing task to the near-memory computing unit 250, where the first address is a reserved address of the near-memory computing unit 250, the processor 230 is coupled to at least one of the memory 240 and the near-memory computing unit 250 through a bus, the near-memory computing unit 250 is tightly coupled to the memory 240, the tight coupling does not need any bus, and the near-memory computing unit 250 is capable of accessing the memory 240 at a speed higher than that of accessing the memory through the bus.

In this embodiment, the tight coupling is near-memory computing coupling.

It should be understood that, that the load information is used to define the first computing task may be understood as that content in the load information is content needed for computing the first computing task, and may be used by the near-memory computing unit to complete the first computing task.

The first address in the memory 240 is the reserved address of the near-memory computing unit 250. To be specific, an area is reserved in the memory 240 for the near-memory computing unit 250, and the area may store the load information needed by the near-memory computing unit 250 for computing. The near-memory computing unit 250 may access the first address to obtain the load information, to complete the first computing task based on the load information.

In a possible implementation, the processor 230 is coupled to the memory 240 through a bus, and the memory 240 is tightly coupled to the near-memory computing unit 250. That is, the near-memory computing unit 250 exchanges data with the memory without using any bus, and the near-memory computing unit accesses the memory 240 at a speed higher than that of accessing the memory 240 through the bus. For example, the near-memory computing unit and the memory may interact with each other through a physical wire or a circuit wire without using a bus, so that bus overheads can be reduced, and a delay and power consumption of data transmission can be reduced. In another possible implementation, when the processor 230 is coupled to the memory 240 through the bus, and the processor 230 is not coupled to the near-memory computing unit 250 through the bus, the processor 230 may store the load information to the first address by using a direct memory access DMA controller, and the near-memory computing unit 250 obtains the load information from the first address. The processor 230 may alternatively schedule the load information to the near-memory computing unit 250 in a manner such as configuring a register. For example, the processor 230 writes the load information into the register. The near-memory computing unit 250 reads the register, obtains the load information from the register, and stores the load information to the first address, to complete computing. The register and the processor 230 may be located in a same chip, for example, an SoC.

The task scheduler may determine the first computing task for the near-memory computing unit in the computing task sequence.

Specifically, the task scheduler may determine the first computing task based on a type of the first computing task. For example, the task scheduler may pre-store a computing type, and the computing type may be one or more preset items. For example, the computing type may include matrix-type computing, cyclic computing, and the like, and the computing type may be in a computing list or a linked list.

For example, the task scheduler determines, based on the computing list, the first computing task for the near-memory computing unit 250 in the computing task sequence. Specifically, when a computing type of a computing task is in the computing type included in the computing list, the computing task may be determined as the first computing task. The first computing task may be one computing task, or may be a plurality of computing tasks. This is not limited in this embodiment of this application.

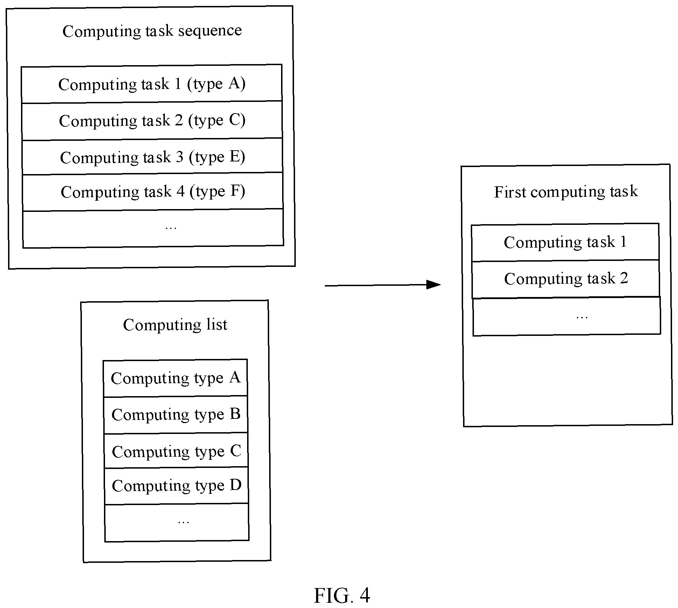

FIG. 4 is a diagram of determining a first computing task based on a computing list according to an embodiment of this application. As shown in FIG. 4, the computing list may include a computing type A, a computing type B, a computing type C, a computing type D, and the like of a computing task. A computing task sequence may include a computing task 1 (whose computing type is A), a computing task 2 (whose computing type is C), a computing task 3 (whose computing type is E), a computing task 4 (whose computing type is F), and the like.

A task scheduler may pre-store the computing list. After receiving a computing task sequence sent by a computing service unit, the task scheduler may determine a target computing task depending on whether a type of a computing task in the computing task sequence is included in the computing list. Still refer to FIG. 4. If computing types of the computing task 1 and the computing task 2 in the computing task sequence are included in the computing list, the computing task 1 and the computing task 2 may be determined as the first computing tasks.

It should be understood that the computing type may be related to a near-memory computing unit. For example, the computing type may be a computing type supported by the near-memory computing unit. For example, when a type of near-memory computing supported by the near-memory computing unit is matrix-type computing, the computing type may include the matrix-type computing. Alternatively, when the computing type does not include the matrix-type computing, the matrix-type computing may be added to the computing type, to complete updating of the computing type.

In some embodiments, the computing type may alternatively be sent by a computing task unit to the task scheduler. Load information of the first computing task may include but is not limited to a data address, a data dimension, a control command word, and the like. The data address may indicate an address at which data is stored in a memory. The data dimension indicates dimension information of the data, for example, a quantity of rows, a quantity of columns, and preferential storage by row or preferential storage by column. The data dimension may further include a data type, and the data type may be a floating-point type, an integer type, or the like. The control command word may be used to control a computing type of the first computing task, for example, multiplication, addition, or multiplication and addition.

The processor may include but is not limited to a central processing unit (central processing unit, CPU), a graphics processing unit (graphics processing unit, GPU), a neural-network processor (neural-network processing unit, NPU), and the like.

The processor may schedule the load information of the first computing task to the near-memory computing unit in the following manners.

### Manner 1

The processor stores the load information to a first address by using a direct memory access (direct memory access, DMA) controller, and the near-memory computing unit accesses the first address, to obtain the load information.

For example, the processor sends an instruction to DMA, where the instruction may include a source address and a destination address of the load information. The DMA controller transfers the load information from the source address to the destination address based on the instruction of the processor by using a DMA write signal, that is, transfers the load information to the memory. In the technical solution, the processor may send the instruction to the DMA controller, and transmit the load information to the first address of the memory according to an existing DMA mechanism, so that redesign is not needed, and design complexity is reduced.

In this case, the DMA controller transmits, under control of the processor, the load information to a fixed address in the memory by using the DMA write signal, where the fixed address may be a reserved address of the near-memory computing unit. The near-memory computing unit may obtain the load information from the fixed address and parse the load information, complete computing based on the load information, and write a computing result into the memory. Then the memory returns a DMA response signal to the DMA controller, and the DMA controller transmits, to the processor, a message or an instruction indicating that DMA transmission is complete.

Correspondingly, the memory writes the load information into the first address under an operation of the DMA controller.

In the technical solution, the processor schedules the load information to the near-memory computing unit according to the existing DMA mechanism, so that the processor does not need to separately send the load information to the near-memory computing unit by using a near-memory computing dedicated instruction. Therefore, decoupling of the processor and the near-memory computing unit is implemented, and bus overheads are reduced. In addition, because the existing DMA mechanism is reused, the design complexity can be reduced.

### Manner 2

The processor may schedule the load information to the near-memory computing unit in a manner such as configuring a register. For example, the load information is scheduled to a first address in the near-memory computing unit.

For example, the processor writes the load information into an on-chip register, and the near-memory computing unit reads the register, and obtains the load information from the register, to complete computing. The on-chip register may be located on an SoC.

It should be understood that, the near-memory computing unit 250 may complete the computing near the memory 240, and the near-memory computing unit 250 may complete interaction with the memory 240 through a physical wire or a circuit wire without using a system bus, so that a delay and power consumption of data transmission can be reduced, system bus overheads can be reduced, and system computing efficiency is improved.

Further, in the technical solution, the task scheduler may parse the computing task to determine whether the computing task supports near-memory computing, so that the computing service unit does not need to sense a computing capability of the computing unit. In addition, the processor stores the load information of the computing task to the first address in the memory by accessing the memory, to allocate the computing task to the near-memory computing unit, where the near-memory computing unit is tightly coupled to the memory. In this case, task computing can be quickly completed, and there is no need to perform task scheduling information transmission between the processor and the near-memory computing unit through a specific bus or interface, so that bus overheads are reduced.

In some embodiments, when the memory and the near-memory computing unit are changed, a computing type supported by a changed near-memory computing unit may change. In this case, a newly added computing type may be added to the computing list, to complete updating of the computing list.

In the technical solution, a preset computing type in the task scheduler may be updated for different near-memory computing units and memories, so that the task scheduler has better adaptability, and compatibility is further improved.

In some other embodiments, the task scheduler may be further configured to determine a second computing task in the computing task sequence. When determining that the second computing task in the computing task sequence is not suitable for near-memory computing, the task scheduler may schedule the computing task to another second computing unit, and the second computing unit computes the second computing task. The second computing unit may be coupled to the memory through a bus, and the second computing unit may include at least one of the processor, an image processing unit, an artificial intelligence (artificial intelligence, AI) processing unit, a digital signal processor, or a dedicated logic circuit.

FIG. 4 is a block diagram of another computing task scheduling apparatus according to an embodiment of this application. As shown in FIG. 4, the apparatus 300 may include a computing service unit 210, a task scheduler 220, a processor 230, a memory 240, and an in-memory computing unit 260.

The in-memory computing unit 260 may be located in the memory 240. For example, the in-memory computing unit 260 may be embedded inside the memory 240 as a part of the memory. The in-memory computing unit 260 inside the memory 240 may exchange data with the memory 240 through a short physical wire or circuit wire, or the in-memory computing unit 260 may directly read data in the memory 240 without using a bus, so that bus overheads can be reduced, and data computing and data transmission can be quickly completed.

For example, the computing service unit 210 sends a compiled computing task sequence to the task scheduler 220. The task scheduler 220 parses the computing task sequence, and determines whether in-memory computing can be performed on a target computing task. When determining that the in-memory computing can be performed on the target computing task, the task scheduler 220 invokes an in-memory computing load generation function to generate load information of the target computing task, and schedules the load information to the processor 230. The processor 230 (for example, a CPU) schedules the load information of the target computing task to a first address in the memory, and the in-memory computing unit 260 accesses the first address to obtain the load information. The in-memory computing unit 260 performs computing on the target computing task based on the load information, and stores a computing result in the memory 240.

It should be understood that, for related descriptions of the computing service unit 210, the task scheduler 220, and the processor 230, refer to the foregoing descriptions. For brevity, details are not described again.

In this embodiment, tight coupling may be in-memory computing coupling.

It should be understood that the in-memory computing unit 260 and the memory 240 may alternatively be a computing in-memory unit. In this case, the tight coupling is computing in-memory coupling.

In the technical solution, the task scheduler may parse the computing task to determine whether the computing task supports the in-memory computing, so that the computing service unit does not need to sense a computing capability of the computing unit, and software complexity is reduced. In addition, the processor stores the load information of the computing task to a fixed address in the memory by accessing the memory, to allocate the computing task to the in-memory computing unit, where the in-memory computing unit is tightly coupled to the memory. In this case, task computing can be quickly completed, and there is no need to perform task scheduling information transmission between the processor and the in-memory computing unit through a specific bus or interface, so that system bus overheads can be reduced.

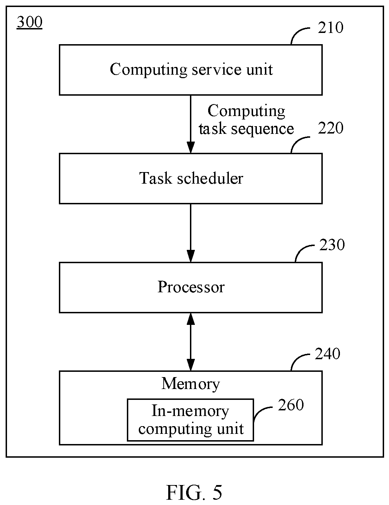

FIG. 5 is a schematic flowchart of a computing task scheduling method according to an embodiment of this application. As shown in FIG. 5, the method 400 may include step 301 to step 308.

301: A computing service unit sends a computing task sequence to a task scheduler TS. Correspondingly, the task scheduler receives the computing task sequence.

The computing task sequence may be one computing task, or may be a plurality of computing task sequences. A quantity of computing tasks included in the computing task sequence is not limited in this embodiment of this application.

The computing service unit may be system software, or may be application software.

In some embodiments, the computing service unit may compile the computing task sequence, and send the compiled computing task sequence to the task scheduler.

302: The task scheduler determines a first computing task for a near-memory computing unit, and generates first load information of the first computing task.

It should be understood that the task scheduler may parse the compiled computing task sequence, and after determining the first computing task, invoke a load generation function to generate near-memory computing load information corresponding to the first computing task.

It should be understood that the first computing task is a computing task that is determined by the task scheduler and on which near-memory computing can be performed.

A manner in which the task scheduler determines the first computing task may be determined based on a computing type of the first computing task. For example, the task scheduler may determine whether a computing type of the first computing task is a preset computing type.

The task scheduler may pre-store a computing type. For example, the computing type may be matrix-type computing, for example, matrix-matrix multiplication or matrix-vector multiplication. Alternatively, the computing type may be cyclic computing, vector convolution operation, or the like.

In some embodiments, the computing type may alternatively be sent by the computing service unit to the task scheduler.

The preset computing type may be in a list, a linked list, or the like.

For example, the computing type is in a list. The list may be a computing type list, and the computing type list may include a computing type A, a computing type B, and a computing type C. When the task scheduler parses the computing task sequence, and the computing task sequence includes the first computing task of the computing type A, the computing type B, or the computing type C, it may be determined that the first computing task is suitable for near-memory computing, so that the task scheduler may invoke the load generation function to generate the load information.

In some other embodiments, the task scheduler may update the preset computing type. For example, for different memories and near-memory computing units, types of near-memory computing supported by the task scheduler may be different. When the memory and the near-memory computing unit are changed, and a target type of near-memory computing supported by the task scheduler is not included in the preset computing type, the target type may be added to the preset computing type. For example, the target type is added to a computing list. In this way, update of the computing type is completed, so that the task scheduler has better adaptability, and compatibility can be improved.

In some other embodiments, in addition to determining the first computing task based on the computing type of the first computing task, the task scheduler may further determine the first computing task based on a data dimension of the first computing task, to determine whether the first computing task is suitable for the near-memory computing. For example, a data volume may be determined based on the data dimension (for example, a quantity of rows multiplied by a quantity of columns). When the data volume is greater than a preset value, it may be determined that the first computing task is suitable for the near-memory computing. Otherwise, the first computing task is not suitable for the near-memory computing. For another example, when it is determined, based on the data dimension, that a data type (for example, a floating-point type) of the first computing task is consistent with a data type (for example, a floating-point type) supported by the near-memory computing unit, it may be determined that the first computing task is suitable for the near-memory computing. Otherwise, the first computing task is not suitable for the near-memory computing.

In some embodiments, after determining that the computing type of the first computing task belongs to the preset computing type, the task scheduler further determines that the data dimension of the first computing task is not suitable for the near-memory computing. In this case, the task scheduler may schedule the first computing task to another computing core for normal computing. Alternatively, after determining that the computing type of the first computing task is the preset computing type, the task scheduler further determines that the data dimension of the target computing task is suitable for the near-memory computing. In this case, the task scheduler may invoke the load generation function to generate the load information, and schedule the load information to a processor.

In some other embodiments, when a second computing task in the computing task sequence does not belong to the preset computing type, it indicates that the second computing task is not suitable for the near-memory computing. For example, if the second computing task is a computing task such as a control flow or an activation function, the task scheduler may schedule the computing task to a second computing unit for normal computing, so that the computing service unit does not need to sense whether the computing unit supports the near-memory computing, and software implementation complexity is reduced. For example, the second computing unit may be at least one of the processor, an image processing unit, an AI processing unit, a digital signal processor, or a dedicated logic circuit, and the second computing unit may be coupled to the memory through a bus.

The first load information may be used to define the first computing task, so that the near-memory computing unit may compute the first computing task based on the first load information.

The load information may include a data address, a data dimension, a control command word, and the like. For specific descriptions of the load information, refer to the foregoing related descriptions. Details are not described herein again.

It should be understood that the load information may further include other information needed for data computing.

303: The task scheduler schedules the first load information to the processor. Correspondingly, the processor receives the first load information.

The processor may be a CPU, a GPU, an NPU, or the like. Alternatively, the processor may be one or more computing cores or computing units in the CPU, the GPU, or the NPU. This is not limited in embodiments of this application.

304: The processor schedules the first load information to the memory.

In a possible implementation, the processor schedules the first load information to the memory by using a DMA controller. Specifically, the processor sends an instruction to the DMA controller, and the DMA controller transmits, based on the instruction, the load information to a fixed address in the memory by using a DMA write signal. For example, the DMA controller transfers, based on the instruction, the load information from a source address to a destination address through the bus.

A reserved address, that is, a first address, dedicated to storing information related to the near-memory computing is reserved in the memory. The reserved address may be used to store the first load information, so that the near-memory computing unit may access the reserved address, to obtain the first load information.

In this way, the processor delivers the load information according to an existing DMA mechanism, and there is no need to add a near-memory computing dedicated instruction, so that the processor does not need to separately deliver scheduling information through the bus. Therefore, system bus overheads can be reduced, and computing efficiency can be improved. In addition, because the existing DMA mechanism is reused, design complexity can be reduced.

In another embodiment, the processor may alternatively schedule the load information to the near-memory computing unit in another manner, for example, schedule the load information to the near-memory computing unit in a manner such as configuring a register. For example, the processor writes the load information into a register, and the near-memory computing unit reads the register, and obtains the load information from the register, to complete computing.

305: The near-memory computing unit obtains the first load information from the memory.

For example, the near-memory computing unit may obtain the first load information from the reserved address in the memory. The near-memory computing unit is located near the memory, and does not need to access the memory through the bus, so that a delay and power consumption of data transmission can be improved.

In another embodiment, the near-memory computing unit may alternatively obtain the load information by using a near-memory computing instruction.

It should be understood that the near-memory computing unit may alternatively obtain the load information in another manner.

306: The near-memory computing unit completes the first computing task based on the first load information.

For example, as defined in the first load information, a matrix multiplication operation is performed on a matrix A1 in an address A and a matrix B1 in an address B, and the near-memory computing unit may indicate, based on the first load information, the memory to complete corresponding computing.

307: The near-memory computing unit sends computing completion information to the memory.

After completing the computing, the near-memory computing unit writes a computing result into the memory, that is, sends the computing completion information to the memory.

308: The memory sends a response signal to the processor.

For example, after receiving the near-memory computing completion information or instruction, the memory may send a DMA response signal to the DMA controller. After receiving the DMA response signal, the DMA controller sends, to the processor, a signal or an instruction indicating that DMA transmission is completed.

Based on this embodiment of this application, the near-memory computing unit may complete computing near the memory, so that a delay and power consumption of data transmission can be reduced, and system computing efficiency is improved.

In the technical solution, the task scheduler may parse the computing task to determine whether the computing task supports the near-memory computing, so that the computing service unit does not need to sense a computing capability of the near-memory computing unit, and software complexity is reduced. In addition, the preset storage and computing type in the task scheduler may be updated for different hardware platforms, and compatibility is further improved. Further, the processor may schedule, to the near-memory computing unit according to the existing DMA mechanism, the load information needed for the near-memory computing, so that there is no need to add a near-memory computing instruction to schedule the computing task. Therefore, the bus overheads can be reduced, and the computing efficiency can be improved.

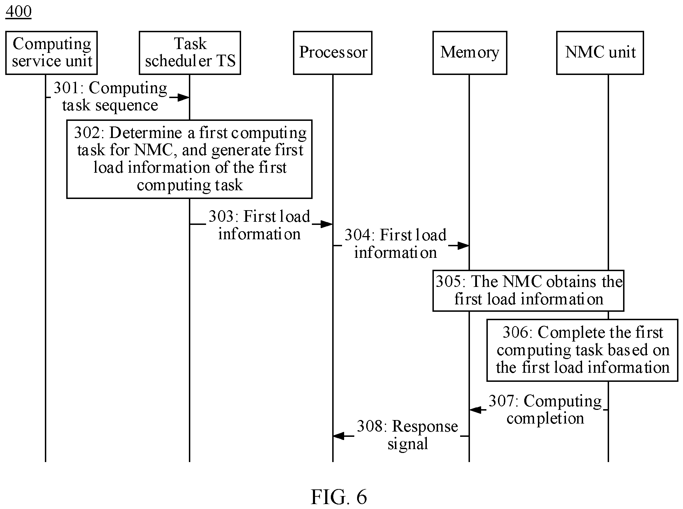

FIG. 6 is a schematic flowchart of another computing task scheduling method according to an embodiment of this application. As shown in FIG. 6, the method 500 may include step 401 to step 407.

401: A computing service unit sends a computing task sequence to a task scheduler TS. Correspondingly, the task scheduler receives the computing task sequence.

402: The task scheduler determines a third computing task for an in-memory computing unit, and generates second load information of the third computing task.

403: The task scheduler schedules the second load information to a processor. Correspondingly, the processor receives the second load information.

404: The processor schedules the second load information to a memory.

It should be understood that, for step 401 to step 404, refer to related descriptions of step 301 to step 304. For brevity, details are not described again.

405: The in-memory computing unit obtains the second load information from the memory.

For example, a reserved address dedicated to storing information related to in-memory computing may be reserved for the in-memory computing unit in the memory. The reserved address may be used to store the second load information, so that the in-memory computing unit may access the reserved address, to obtain the second load information.

406: The in-memory computing unit completes the third computing task based on the second load information.

407: The memory sends a response signal to the processor.

It should be understood that, for step 406 and step 407, refer to related descriptions of step 306 and step 307. For brevity, details are not described again.

In some other embodiments, the in-memory computing unit and the memory may alternatively be a computing in-memory unit.

Based on this embodiment of this application, the in-memory computing unit may complete computing in the memory, so that there is no need to add an in-memory computing instruction. Therefore, bus overheads are reduced, a delay and power consumption of data transmission can be reduced, and system computing efficiency is improved.

In the technical solution, the task scheduler may parse the computing task to determine whether the computing task supports the in-memory computing, so that the computing service unit does not need to sense a computing type of the computing task supported by the in-memory computing unit, and software complexity is reduced. In addition, a preset computing type in the task scheduler may be updated for different in-memory computing units and memories, and compatibility is further improved. Further, the processor may schedule, to the in-memory computing unit according to an existing DMA mechanism, the load information needed for the in-memory computing, and does not need to separately transmit an in-memory computing instruction through a bus, so that the bus overheads can be reduced, and the computing efficiency can be improved.

An embodiment of this application further provides a computer-readable storage medium. The computer-readable storage medium stores computer instructions. When the computer instructions are run on a computer, the computing task scheduling method according to any one of the foregoing implementations is performed.

An embodiment of this application further provides a computer-readable storage medium. The computer-readable storage medium stores computer instructions. When the computer instructions are run on a computer, the computing method according to any one of the foregoing implementations is performed.

An embodiment of this application further provides a computer program product. When the computer program product runs on a computer, the computer is enabled to perform the foregoing related steps, to implement the computing task scheduling method in the foregoing embodiments.

An embodiment of this application further provides a computer program product. When the computer program product runs on a computer, the computer is enabled to perform the foregoing related steps, to implement the computing method in the foregoing embodiments.

An embodiment of this application further provides a computing system, including the computing task scheduling apparatus and the computing apparatus according to any one of the foregoing implementations.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, so that the chip performs the computing task scheduling method or the computing method in the foregoing method embodiments.

The computing task scheduling apparatus, the computing apparatus, the computer-readable storage medium, the computer program product, and the chip provided in embodiments are all configured to perform the corresponding methods provided above. Therefore, for beneficial effects that can be achieved by the computing task scheduling apparatus, the computing apparatus, the computer-readable storage medium, the computer program product, and the chip, refer to the beneficial effects of the corresponding methods provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the method in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A computing task scheduling apparatus, comprising:
a task scheduler, configured to: determine a first computing task for a first computing unit, and generate load information of the first computing task, wherein the load information is used to define the first computing task; and
a processor, configured to: receive the load information from the task scheduler, and store the load information to a first address in a memory, to allocate the first computing task to the first computing unit, wherein the first address is a reserved address of the first computing unit, the processor is coupled to at least one of the memory and the first computing unit through a bus, the first computing unit is tightly coupled to the memory, the tight coupling does not need any bus, and the first computing unit is capable of accessing the memory at a speed higher than that of accessing the memory through the bus.

2. The apparatus according to claim 1, wherein the processor is specifically configured to:
store the load information to the first address by using a direct memory access DMA controller.

3. The apparatus according to claim 1 or 2, wherein the task scheduler is a dedicated task scheduler other than system software or application software.

4. The apparatus according to claim 3, wherein the task scheduler is further configured to:
receive a computing task sequence from the system software or the application software, and determine the first computing task for the first computing unit in the computing task sequence.

5. The apparatus according to claim 4, wherein the task scheduler is further configured to:
determine a second computing task for a second computing unit in the computing task sequence; and
schedule the second computing task to the second computing unit, wherein
the second computing unit comprises at least one of the processor, an image processing unit, an artificial intelligence Al processing unit, a digital signal processor, or a dedicated logic circuit, and the second computing unit and the memory are coupled through the bus.

6. The apparatus according to claim 4, wherein the task scheduler is specifically configured to:
determine, based on a computing list, the first computing task for the first computing unit in the computing task sequence, wherein the computing list comprises a computing task type supported by the first computing unit.

7. The apparatus according to any one of claims 1 to 6, wherein the load information comprises at least one of the following information:
a data address, a data dimension, or a control command word.

8. The apparatus according to any one of claims 1 to 7, wherein the tight coupling comprises near-memory computing coupling, in-memory computing coupling, or computing in-memory coupling.

9. A computing apparatus, comprising:
a memory; and
a first computing unit, configured to: obtain load information from a first address in the memory, and complete a first computing task based on the load information, wherein the load information is used to define the first computing task, and the first address is a reserved address of the first computing unit;
the first computing unit is tightly coupled to the memory, the tight coupling does not need any bus, and the first computing unit is capable of accessing the memory at a speed higher than that of accessing the memory through a bus; and
at least one of the memory and the first computing unit is coupled to a processor through the bus.

10. The apparatus according to claim 9, wherein the load information comprises at least one of the following information:
a data address, a data dimension, or a control command word.

11. The apparatus according to claim 9 or 10, wherein the tight coupling comprises near-memory computing coupling, in-memory computing coupling, or computing in-memory coupling.

12. The apparatus according to any one of claims 9 to 11, wherein the memory is specifically configured to:
write the load information into the first address under an operation of a direct memory access DMA controller.

13. A computing task scheduling method, comprising:
determining, by a task scheduler, a first computing task for a first computing unit, and generating load information of the first computing task, wherein the load information is used to define the first computing task; and
receiving, by a processor, the load information from the task scheduler, and storing the load information to a first address in a memory, to allocate the first computing task to the first computing unit, wherein the first address is a reserved address of the first computing unit, the processor is coupled to at least one of the memory and the first computing unit through a bus, the first computing unit is tightly coupled to the memory, the tight coupling does not need any bus, and the first computing unit is capable of accessing the memory at a speed higher than that of accessing the memory through the bus.

14. The method according to claim 13, wherein the storing the load information to a first address in a memory, to allocate the first computing task to the first computing unit comprises:
storing the load information to the first address by using a direct memory access DMA controller, to allocate the first computing task to the first computing unit.

15. The method according to claim 13 or 14, wherein the task scheduler is a dedicated task scheduler other than system software or application software.

16. The method according to claim 15, wherein the determining, by a task scheduler, a first computing task for a first computing unit comprises:
receiving, by the task scheduler, a computing task sequence from the system software or the application software, and determining the first computing task for the first computing unit in the computing task sequence.

17. The method according to claim 16, wherein the method further comprises:
determining a second computing task for a second computing unit in the computing task sequence; and
scheduling the second computing task to the second computing unit, wherein
the second computing unit comprises at least one of the processor, an image processing unit, an artificial intelligence AI processing unit, a digital signal processor, or a dedicated logic circuit, and the second computing unit and the memory are coupled through the bus.

18. The method according to claim 16, wherein the determining the first computing task for the first computing unit in the computing task sequence comprises:
determining, based on a computing list, the first computing task for the first computing unit in the computing task sequence, wherein the computing list comprises a computing task type supported by the first computing unit.

19. The method according to any one of claims 13 to 18, wherein the load information comprises at least one of the following information:
a data address, a data dimension, or a control command word.

20. The method according to any one of claims 13 to 19, wherein the tight coupling comprises near-memory computing coupling, in-memory computing coupling, or computing in-memory coupling.

21. A computing method, comprising:
obtaining, by a first computing unit, load information from a first address in a memory, and completing a first computing task based on the load information, wherein the load information is used to define the first computing task, and the first address is a reserved address of the first computing unit, wherein
the first computing unit is tightly coupled to the memory, the tight coupling does not need any bus, and the first computing unit is capable of accessing the memory at a speed higher than that of accessing the memory through a bus; and
at least one of the memory and the first computing unit is coupled to a processor through the bus.

22. The method according to claim 21, wherein the load information comprises at least one of the following information:
a data address, a data dimension, or a control command word.

23. The method according to claim 21 or 22, wherein the tight coupling comprises near-memory computing coupling, in-memory computing coupling, or computing in-memory coupling.

24. The method according to any one of claims 21 to 23, wherein the method further comprises:
writing, by the memory, the load information into the first address under an operation of a direct memory access DMA controller.

25. A computer-readable storage medium, wherein the storage medium stores a computer program or instructions; and when the computer program or the instructions are executed by a communication apparatus, the computing task scheduling method according to any one of claims 13 to 20 is performed, or the computing method according to any one of claims 21 to 24 is performed.
